# EUROPEAN PATENT SPECIFICATION

(11) **EP 2 021 106 B1**
(45) Date of publication and mention of the grant of the patent: **22.01.2020**
(21) Application number: 07784179.9
(22) Date of filing: 29.05.2007
(51) Int. Cl.: B01D 61/14, C02F 1/44, B01D 61/02, B01D 61/58, B01D 65/02, C02F 1/56, B01D 61/16

(54) **METHOD OF IMPROVING PERFORMANCE OF ULTRAFILTRATION OR MICROFILTRATION MEMBRANE PROCESS IN BACKWASH WATER TREATMENT**
VERFAHREN ZUR ERHÖHUNG DER LEISTUNG IN EINEM ULTRAFILTERUNGS- ODER MIKROFILTERUNGSPROZESS WÄHREND DER VERARBEITUNG VON RÜCKSPÜLWASSER
PROCÉDÉ D'AMÉLIORATION DE PERFORMANCE D'UN PROCÉDÉ DE MEMBRANE D'ULTRAFILTRATION OU DE MICROFILTRATION DANS LE TRAITEMENT D'EAU DE RINÇAGE

(30) Priority: 31.05.2006 US 421172
(43) Date of publication of application: 11.02.2009
(73) Proprietor: Nalco Company, Naperville, IL 60563-1198 (US)
(72) Inventor: MUSALE, Deepak, A., Aurora, Illinois 60502 (US)
(74) Representative: Godemeyer Blum Lenze Patentanwälte Partnerschaft mbB - werkpatent
(86) International application number: PCT/US2007/069865
(87) International publication number: WO 2007/143448

(56) References cited:
- EP-A1- 1 903 008
- EP-A2- 0 941 967
- WO-A1-2005/070833
- US-A- 5 766 478
- US-A1- 2004 168 980

## Description

### FIELD OF THE INVENTION

This invention pertains to a method of processing backwash water via the use of a membrane system including a microfiltration membrane or an ultrafiltration membrane.

### BACKGROUND

Backwash water is a wastewater stream generated after the raw water is filtered through a medium such as a media filter, ultrafiltration (UF) membrane, or a microfiltration (MF) membrane and backwashed to remove the accumulated solids from the media filter or UF/MF membrane surface. This backwash water, which is a relatively concentrated stream compared to raw water, contains high levels of contaminants such as suspended solids, colloidal material, bacteria, viruses and other soluble organics. Net water recoveries after media filtration or first stage UF or MF system are about 85-90%, which means 10-15% of feed water is converted into concentrate or backwash water. This water is further treated by second stage UF or MF system to increase the net water recovery to 96-98%. The permeate water recovered from this second stage UF / MF is as clean as from the first stage UF/MF system and can be used in process systems or just as more drinking water. However, due to higher level of contaminants in the backwash water of the first stage UF/MF, the second stage UF /MF system membranes get fouled quickly and have to be operated at lower fluxes than first stage UF /MF system membranes. This results in both higher capital cost (more membranes) and higher operating cost (frequent membrane cleaning). Therefore, it is of interest to minimize membrane fouling in the second stage UF/ MF system so that membranes: operate for a longer period between cleanings; operate at a rate of flux in accord with the chosen membrane; operate at higher than currently achievable fluxes; or a combination thereof. In addition, it of interest to lower the number and /or size of the membranes so that capital costs of new systems containing second stage UF/MF membranes for backwash water recovery are lowered.

WO 2005/070833 A1 discloses a method for treating a raw water containing a hardly decomposable substance, which comprises the following steps: a step (B) of adding an adsorbing agent to a raw water containing a hardly decomposable substance (a raw water to be treated) to allow said adsorbing agent to adsorb the hardly decomposable substance (an adsorption treatment step), a step (C) of separating a permeated liquid by the use of a filtration film, to concentrate the adsorbing agent having absorbed said hardly decomposable substance (a film filtration treatment step), and (D) a step of chemically decomposing the hardly decomposable substance being adsorbed in the concentrated adsorbing agent by a peroxide, without the operation for desorption from said adsorbing agent (a chemical decomposition step), and, by the above steps, concentrates hardly decomposable substances such as dioxins contained in a contaminated water (the raw water to be treated) and converts the hardly decomposable substances to harmless substances. The above method can be applied also to a raw water containing a reducing substance such as a hydrogensulfite for neutralizing free chlorine, the application thereof is not limited by the properties of hardly decomposable substances being contained, and also it allows conversion of hardly decomposable substances to harmless ones with good efficiency at a low cost.

EP 0941967 A2 discloses a recycling treatment for water used to backwash swimming pool filters which consists of leading off highly contaminated pool filter (5) backwashing water as a stream of waste water. A slightly contaminated stream is sent for micro- or ultra-filtration (12). The resultant filtrate is returned to the swimming pool (1) circuit.

US 5,766,478 A discloses a process of selectively separating a target metal contained in an aqueous solution by contacting the aqueous solution containing a target metal with an aqueous solution including a water-soluble polymer capable of binding with the target metal for sufficient time whereby a water-soluble polymer-target metal complex is formed, and, separating the solution including the water-soluble polymer-target metal complex from the solution.

US 2004/168980 A1 discloses a method of conditioning mixed liquor in a membrane biological reactor comprising adding one or more water soluble anionic polymers to the mixed liquor and also adding one or more water soluble cationic, amphoteric or zwitterionic polymers, or combination thereof; wherein said one or more water soluble anionic polymers may be added either before, simultaneously with or after the addition of said water soluble cationic, amphoteric or zwitterionic polymers. Also described are methods of reducing membrane fouling, enhancing membrane flux and reducing sludge production.

EP 1903008 A1 discloses a method for treating a hardly-decomposable-substance-containing water including: (B) adding an adsorbent to water containing a hardly decomposable substance to cause the hardly decomposable substance to be adsorbed on the adsorbent (adsorption treatment step); (C) separating a permeated liquid through a filter membrane to concentrate the adsorbent which has adsorbed the hardly decomposable substance (membrane filtering treatment step); (D) decomposing the hardly decomposable substance which has been adsorbed on the concentrated adsorbent (hardly decomposable substance decomposition step); and (E) returning the adsorbent after the decomposition of the hardly decomposable substance to the adsorption treatment step (B) (adsorbent returning step); and an apparatus for the treatment.

### SUMMARY OF THE INVENTION

The present invention provides a method of processing backwash water by use of a membrane separation process according to claim 1.

### BRIEF DESCRIPTION OF THE DRAWINGS

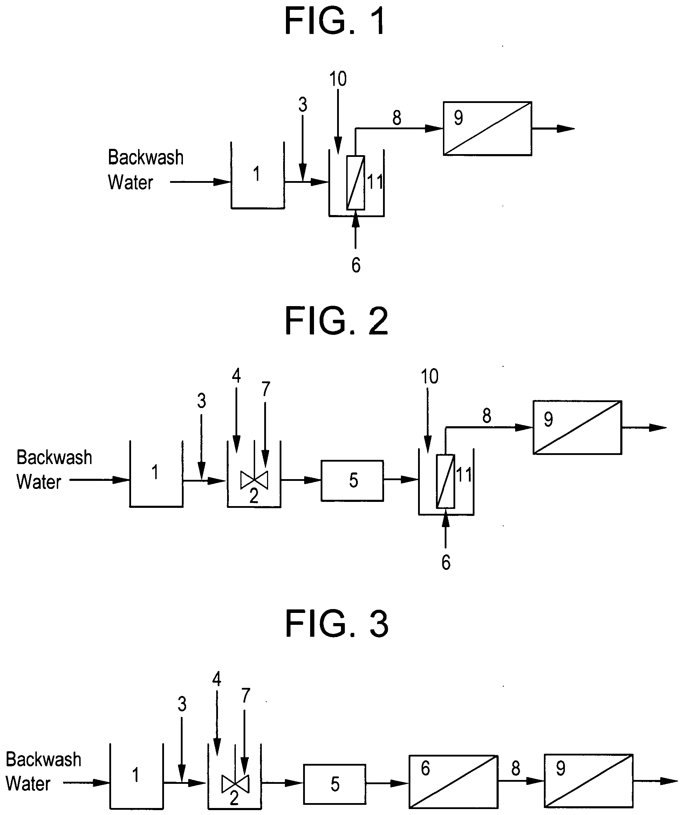

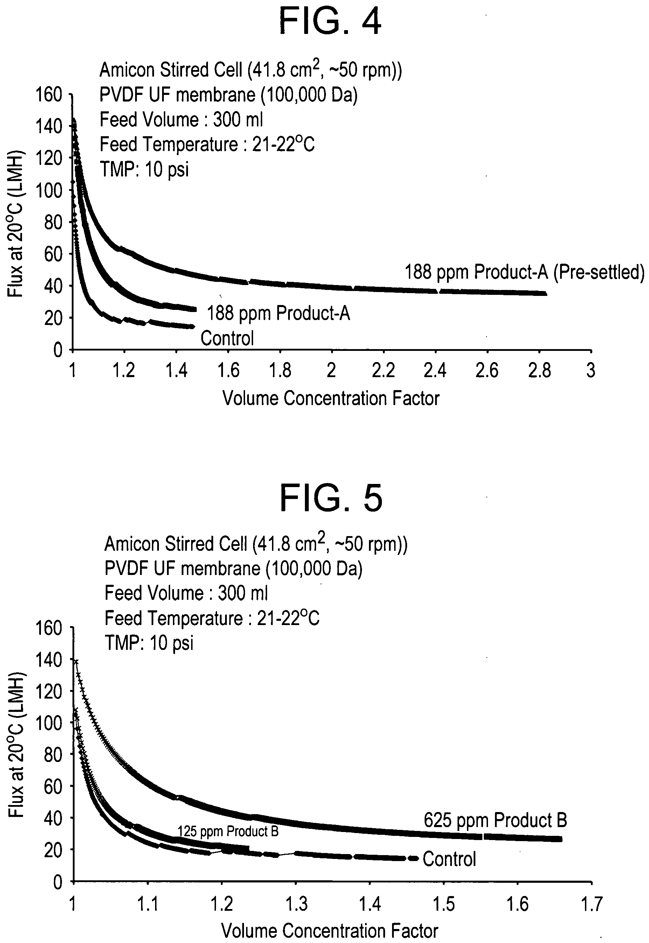

Figure 1 illustrates a general process scheme for processing backwash water, which includes a microfiltration membrane/ultrafiltration membrane, wherein the membrane is submerged in a tank, as well as an additional membrane for further processing of the permeate from said microfiltration membrane/ultrafiltration membrane.
Figure 2 illustrates a general process scheme for processing backwash water, which includes a mixing tank, a clarifier /pre-filter and a microfiltration membrane/ultrafiltration membrane, wherein the membrane is submerged in a tank, as well as an additional membrane for further processing of the permeate from said microfiltration membrane/ultrafiltration membrane.
Figure 3 illustrates a general process scheme for processing backwash water, which includes a mixing tank, a clarifier /pre-filter and a microfiltration membrane/ ultrafiltration membrane, wherein the membrane is external to a feed tank that contains the backwash water, as well as an additional membrane for further processing of the permeate from said microfiltration membrane/ultrafiltration membrane.

### DETAILED DESCRIPTION OF THE INVENTION

### Definitions of Terms:

"UF" means ultrafiltration.

"MF" means microfiltration.

"Amphoteric polymer" means a polymer derived from both cationic monomers and anionic monomers, and, possibly, other non-ionic monomer(s). Amphoteric polymers can have a net positive or negative charge. The amphoteric polymer may also be derived from zwitterionic monomers and cationic or anionic monomers and possibly nonionic monomers. The amphoteric polymer is water soluble.

"Cationic polymer" means a polymer having an overall positive charge. The cationic polymers of this invention are prepared by polymerizing one or more cationic monomers, by copolymerizing one or more nonionic monomers and one or more cationic monomers, by condensing epichlorohydrin and a diamine or polyamine or condensing ethylenedichloride and ammonia or formaldehyde and an amine salt. The cationic polymer is water soluble.

"Zwitterionic polymer" means a polymer composed from zwitterionic monomers and, possibly, other non-ionic monomer(s). In zwitterionic polymers, all the polymer chains and segments within those chains are rigorously electrically neutral. Therefore, zwitterionic polymers represent a subset of amphoteric polymers, necessarily maintaining charge neutrality across all polymer chains and segments because both anionic charge and cationic charge are introduced within the same zwitterionic monomer. The zwitterionic polymer is water soluble.

### Preferred Embodiments:

As stated above, the invention provides for a method of processing backwash water by use of a microfiltration membrane or an ultrafiltration membrane.

After the backwash water is collected and treated with one or more water-soluble polymers, the backwash water is passed through a membrane. In one embodiment, the membrane may be submerged in a tank. In another embodiment, the membrane is external to a feed tank that contains said backwash water.

In another embodiment, the backwash water that passes through the second microfiltration membrane or ultrafiltration membrane may be further processed through one or more membranes. In yet a further embodiment, the additional membrane is either a reverse osmosis membrane or a nanofiltration membrane.

Various backwash water processing schemes would be apparent to one of ordinary skill in the art. In one embodiment, the collected landfill leachate may be passed through one or more filters or clarifiers prior to its passage through an ultrafiltration membrane or a microfiltration membrane. In a further embodiment, the filter is selected from the group consisting of: a sand filter; a multimedia filter; a cloth filter; a cartridge filter; and a bag filter.

The membranes utilized to process backwash water may have various types of physical and chemical parameters.

With respect to physical parameters, in one embodiment, the ultrafiltration membrane has a pore size in the range of 0.003 to 0.1 µm. In another embodiment, the microfiltration membrane has a pore size in the range of 0.1 to 0.4 µm. In another embodiment, the membrane has a hollow fiber configuration with outside-in or inside-out filtration mode. In another embodiment, the membrane has a flat sheet configuration. In another embodiment, the membrane has a tubular configuration. In another embodiment, the membrane has a multi-bore structure.

With respect to chemical parameters, in one embodiment, the membrane is polymeric. In another embodiment, the membrane is inorganic. In yet another embodiment, the membrane is stainless steel.

There are other physical and chemical membrane parameters that may be implemented for the claimed invention.

Various types and amounts of chemistries maybe utilized to treat the backwash water. The backwash water collected from a first stage UF / MF process is treated with one or more water-soluble polymers according to claim 1. Optionally, mixing of the backwash water with the added polymer is assisted by a mixing apparatus, There are many different types of mixing apparatuses that are known to those of ordinary skill in the art.

In another embodiment, these water-soluble polymers typically have a molecular weight of 2,000 to 10,000,000 daltons.

The water-soluble polymers are cationic polymers.

The cationic polymers are copolymers of acrylamide (AcAm) and one or more cationic monomers selected from the group consisting of: diallyldimethylammonium chloride; dimethylaminoethylacrylate methyl chloride quaternary salt; dimethylaminoethylmethacrylate methyl chloride quaternary salt; and dimethylaminoethylacrylate benzyl chloride quaternary salt (DMAEA.BCQ)

In another embodiment, the cationic polymers have cationic charge between 20 mole percent and 50 mole percent.

The dosage of cationic polymers is from 0.1 ppm to 1000 ppm active solids.

In another embodiment, the cationic polymers have a cationic charge of at least 5 mole percent.

In another embodiment, the cationic polymers have a cationic charge of 100 mole percent.

In another embodiment, the cationic polymers have a molecular weight of 100,000 to 10,000,000 daltons.

Three potential backwash water processing schemes are shown in Figure 1 through Figure 3.

Referring to Figure 1, backwash water from first stage UF/MF system is collected in a backwash water receptacle (1). The backwash water then flows through a conduit, wherein said in-line addition (3) of one or more polymers occurs. The treated backwash water then flows into a membrane unit (6) that is submerged in a tank (11). Also, polymer (10) may be added to the tank (11) containing the submerged membrane. The submerged membrane is a second ultrafiltration membrane or a microfiltration membrane. Optionally, the subsequent permeate (8) then flows through an additional membrane (9) that may be either a reverse osmosis membrane or a nanofiltration membrane.

Referring to Figure 2, backwash water is collected in a backwash water receptacle (1). The backwash water then flows through a conduit, wherein said in-line addition (3) of one or more polymers occurs. The treated backwash water subsequently flows into a mixing tank (2), wherein it is mixed with a mixing apparatus (7), optionally additional polymer (4) is added to the mixing tank (2). The treated backwash water then travels through a pre-filter (5) or clarifier (5). The treated backwash water then flows through a conduit into a membrane unit (6) that is submerged in a tank (11). Optionally polymer (10) may be added to the tank (11) containing the submerged membrane. The submerged membrane is a second ultrafiltration membrane or a microfiltration membrane. Optionally, the subsequent permeate (8) then flows through an additional membrane (9) that maybe either a reverse osmosis membrane or a nanofiltration membrane.

Referring to Figure 3, backwash water is collected in a backwash water receptacle (1). The backwash water then flows through a conduit, wherein said in-line addition (3) of one or more polymers occurs. The treated backwash water subsequently flows into a mixing tank (2), wherein it is mixed with a mixing apparatus (7), optionally additional polymer (4) is added to the mixing tank (2). The treated backwash water travels through a pre-filter (5) or clarifier (5). The treated backwash water then flows through a conduit into a membrane unit (6), either containing a second microfiltration membrane or an ultrafiltration membrane. Optionally the subsequent permeate (8) then flows through an additional membrane (9) that may be either a reverse osmosis membrane or a nanofiltration membrane. The resulting permeate is collected for various purposes known to those of ordinary skill in the art.

In another embodiment, the membrane separation process is selected from the group consisting of: a cross-flow membrane separation process; semi-dead end flow membrane separation process; and a dead-end flow membrane separation process.

The following examples are not intended to limit the scope of the claimed invention.

### EXAMPLES

Membrane performance was studied by turbidity measurements and actual membrane filtration studies on polymer treated backwash water samples. Turbidity was measured by a Hach Turbidimeter (Hach, Ames, 1A), that is sensitive to 0.06 NTU (Nephelometric Turbidimetric Unit) and membrane filtration studies were conducted in a dead-end filtration stirred cell (Millipore, Bedford, MA) with 42 cm² membrane area at 50 rpm stirring speed, 68948 Pa-absolute (10 psig) Trans-membrane pressure (TMP)
and 100,000 daltons UF membrane.

### Example 1

Increasing amounts of organic (cationic and anionic) polymers, inorganic products, and a combination of inorganic and organic products were slowly added into a backwash water sample (obtained from a southern US raw water microfiltration plant) in separate jars while mixing with a magnetic stirrer for about 3 minutes. The turbidity of supernatant was measured after the treated solids were settled for 10 minutes in a jar.

**Table 1: Turbidity of treated and untreated backwash water sample**

| Product | Dosage (ppm-active) | Supernatant Turbidity* (NTU) |
|---|---|---|
| None | | 525 |
| Product-A (Core Shell DMAEA.MCQ/AcAm, 50% cationic mole charge) | 5.25 | 195 |
| Product-B (DMAEA.MCQ/BCQ/AcAm, 35% cationic mole charge) | 2.5 | 321 |
| Product-C (Aluminum Chlorohydrate + PolyDADMAC) | 3.1 | 544 |
| | 1.1 | |
| Ferric Chloride | 4.5 | 496 |
| Aluminum Chlorohydrate | 6.25 | 543 |

| | | |
|---|---|---|
| * After settling for 10 minutes | | |

It is clear from Table 1 that turbidity decreased significantly with cationic organic polymers according to the invention (Product-A and Product B), but not with cationic inorganic products, or blend of inorganic product and organic polymer.

### Example 2

Utilizing the protocol described in Example 1, backwash water treated with Product-A (Core shell DMAEA.MCQ/AcAm) was directly filtered through a UF membrane and the permeate flux monitored as a function of volume concentration factor ("VCF") (i.e. ratio of Feed volume to Retentate volume). Results are shown in Figure 1. Figure 1 also shows the results for filtration of treated and then pre-settled backwash water.

It is apparent from Figure 1, that at a given volume concentration factor, permeate flux was about 100% higher than control, and after pre-settling of treated solids permeate flux was higher by more than 200% than control.

### Example 3

Utilizing the protocol described in Example 1, backwash water was treated with two different dosages of Product-B (DMAEA.MCQ/BCQ/AcAm) before filtering through a UF membrane. Results are shown in Figure 2.

It is apparent from Figure 2 that increasing dosage of Product B resulted in increase in permeate flux, which was about 100% higher than control with 625 ppm product-B, for example, at VCF of 1.3.

## Claims

1. A method of processing backwash water by use of a membrane separation process comprising the following steps:
a. providing a backwash water generated after a raw water is filtered through a first ultrafiltration membrane, or a first microfiltration membrane and backwashed to remove accumulated solids from the ultrafiltration membrane, or the microfiltration membrane surface,
b. collecting said backwash water in a receptacle (1) suitable to hold said backwash water;
c. treating said backwash water with one or more water soluble polymers, wherein said water soluble polymers are selected from the group consisting of cationic polymers having a charge density from 5 mole percent to 100 mole percent;
d. optionally mixing said water soluble polymers with said backwash water;
e. passing said treated backwash water through a second ultrafiltration membrane (6) or a second microfitration membrane (6); and
f. optionally back-flushing said membrane (6) of step e. to remove solids from the membrane (6) surface,
wherein the cationic polymers are copolymers of acrylamide and one or more cationic monomers selected from the group consisting of:
diallyldimethylammonium chloride, dimethylaminoethylacrylate methyl chloride quaternary salt, dimethylaminoethylmethacrylate methyl chloride quaternary salt and dimethylaminoethylacrylate benzyl chloride quaternary salt, and
wherein the dosage of cationic polymers is from 0.1 ppm to 1000 ppm active solids.

2. The method of claim 1, wherein a driving force for passage of said backwash water through said membrane (6) of step e. is positive or negative pressure.

3. The method of claim 1, wherein said ultrafiltration membrane (6) of step e. has a pore size in the range of 0,003 to 0.1 µm.

4. The method of claim 1, wherein said microfitration membrane (6) of step e. has a pore size in the range of 0.1 to 0.4 µm.

5. The method of claim 1 wherein said membrane (6) of step e. is submerged in a tank (11).

6. The method of claim 1, wherein said membrane (6) of step e. is external to a feed tank that contains said backwash water.

7. The method of claim 1, wherein the water soluble polymers have a molecular weight of 2,000 to 10,000,000 daltons.

8. The method of claim 1, wherein the cationic polymers have a cationic charge of 100 mole percent.

9. The method of claim 1, wherein the cationic polymers have a molecular weight of 500,000 to 10,000,000 daltons.

10. The method of claim 1 further comprising passing said backwash water after polymer treatment through a filter (5) or a clarifier (5) prior to said backwash water's passage through said membrane (6) of step e.

11. The method of claim 1 further comprising: passing a filtrate from said membrane (6) of step e. through an additional membrane (9).

## Patentansprüche

1. Verfahren für das Verarbeiten von Rückspülwasser durch Verwenden eines Membrantrennungsverfahrens, umfassend die folgenden Schritte:
a. Bereitstellen eines Rückspülwassers, das erzeugt wird, nachdem ein Rohwasser durch eine erste Ultrafiltrationsmembran oder eine erste Mikrofiltrationsmembran filtriert und rückgespült wird, um akkumulierte Feststoffe aus der Ultrafiltrationsmembran- oder der Mikrofiltrationsmembranoberfläche zu entfernen,
b. Sammeln des Rückspülwassers in einem Behälter (1), der geeignet ist, um das Rückspülwasser zu halten;
c. Behandeln des Rückspülwassers mit einem oder mehreren wasserlöslichen Polymeren, wobei die wasserlöslichen Polymere aus der Gruppe ausgewählt sind, die aus kationischen Polymeren aufweisend eine Ladungsdichte von 5 Molprozent bis 100 Molprozent besteht;
d. gegebenenfalls Mischen der wasserlöslichen Polymere mit dem Rückspülwasser;
e. Leiten des behandelten Rückspülwassers durch eine zweite Ultrafiltrationsmembran (6) oder eine zweite Mikrofitrationsmembran (6); und
f. gegebenenfalls Rückspülen der Membran (6) von Schritt e., um Feststoffe von der Oberfläche der Membran (6) zu entfernen,
wobei die kationischen Polymere Copolymere aus Acrylamid und einem oder mehreren kationischen Monomeren sind, die aus der Gruppe ausgewählt sind, die aus Folgendem besteht:
Diallyldimethylammoniumchlorid, Dimethylaminoethylacrylat-Methylchlorid-quaternärem Salz, Dimethylaminoethylmethacrylat-Methylchlorid-quaternärem Salz und Dimethylaminoethylacrylatbenzylchlorid-quaternärem Salz, und wobei die Dosierung von kationischen Polymeren 0,1 ppm bis 1000 ppm aktive Feststoffe beträgt.

2. Verfahren nach Anspruch 1, wobei eine Antriebskraft für den Durchgang des Rückspülwassers durch die Membran (6) von Schritt e. positiver oder negativer Druck ist.

3. Verfahren nach Anspruch 1, wobei die Ultrafiltrationsmembran (6) von Schritt e. eine Porengröße im Bereich von 0,003 bis 0,1 µm aufweist.

4. Verfahren nach Anspruch 1, wobei die Mikrofiltrationsmembran (6) von Schritt e. eine Porengröße im Bereich von 0,1 bis 0,4 µm aufweist.

5. Verfahren nach Anspruch 1, wobei die Membran (6) von Schritt e. in einem Tank (11) getaucht ist.

6. Verfahren nach Anspruch 1, wobei sich die Membran (6) von Schritt e. außerhalb eines Speisetanks, der das Rückspülwasser enthält, befindet.

7. Verfahren nach Anspruch 1, wobei die wasserlöslichen Polymere ein Molekulargewicht von 2.000 bis 10.000.000 Dalton aufweisen.

8. Verfahren nach Anspruch 1, wobei die kationischen Polymere eine kationische Ladung von 100 Molprozent aufweisen.

9. Verfahren nach Anspruch 1, wobei die kationischen Polymere ein Molekulargewicht von 500.000 bis 10.000.000 Dalton aufweisen.

10. Verfahren nach Anspruch 1, ferner umfassend das Leiten des Rückspülwassers nach der Polymerbehandlung durch einen Filter (5) oder einen Klärapparat (5) vor dem Durchtritt des Rückspülwassers durch die Membran (6) von Schritt e.

11. Verfahren nach Anspruch 1, ferner umfassend:
Durchleiten eines Filtrats von der Membran (6) von Schritt e. durch eine zusätzliche Membran (9).

## Revendications

1. Procédé de traitement d'eau de lavage à contre-courant grâce à un procédé de séparation par membrane comprenant les étapes suivantes :
a. fournir une eau de lavage à contre-courant générée après qu'une eau brute est filtrée à travers une première membrane d'ultrafiltration ou une première membrane de microfiltration et lavée à contre-courant pour éliminer les solides accumulés de la membrane d'ultrafiltration ou de la surface de la membrane de microfiltration,
b. collecter ladite eau de lavage à contre-courant dans un réceptacle (1) apte à contenir ladite eau de lavage à contre-courant ;
c. traiter ladite eau de lavage à contre-courant avec un ou plusieurs polymères solubles dans l'eau, dans laquelle lesdits polymères solubles dans l'eau sont choisis dans le groupe constitué par les polymères cationiques ayant une densité de charge de 5 à 100 % en moles ;
d. mélanger éventuellement lesdits polymères solubles dans l'eau à ladite eau de lavage à contre-courant ;
e. faire passer ladite eau de lavage à contre-courant traitée à travers une seconde membrane d'ultrafiltration (6) ou une seconde membrane de microfitration (6) ; et
f. éventuellement, décolmater ladite membrane (6) de l'étape e. afin d'éliminer les solides de la surface de la membrane (6),
dans lequel les polymères cationiques sont des copolymères d'acrylamide et d'un ou de plusieurs monomères cationiques choisis dans le groupe comprenant :
du chlorure de diallyldiméthylammonium, du sel quaternaire de chlorure de méthyle de diméthylaminoéthylacrylate, du sel quaternaire de chlorure de méthyle de diméthylaminoéthylméthacrylate et du sel quaternaire de chlorure de benzyle de diméthylaminoéthylacrylate, et dans lequel le dosage de polymères cationiques est de 0,1 ppm à 1 000 ppm de matières actives.

2. Procédé selon la revendication 1, dans lequel une force motrice permettant le passage de ladite eau de lavage à contre-courant à travers ladite membrane (6) de l'étape e. est une pression positive ou négative.

3. Procédé selon la revendication 1, dans lequel ladite membrane (6) d'ultrafiltration de l'étape e. présente une taille de pores dans la plage de 0,003 à 0,1 µm.

4. Procédé selon la revendication 1, dans lequel ladite membrane (6) de microfiltration de l'étape e. présente une taille de pores dans la plage de 0,1 à 0,4 µm.

5. Procédé selon la revendication 1, dans lequel ladite membrane (6) de l'étape e. est immergée dans un réservoir (11).

6. Procédé selon la revendication 1, dans lequel ladite membrane (6) de l'étape e. est externe à un réservoir d'alimentation qui contient ladite eau de lavage à contre-courant.

7. Procédé selon la revendication 1, dans lequel les polymères solubles dans l'eau ont un poids moléculaire de 2 000 à 10 000 000 de daltons.

8. Procédé selon la revendication 1, dans lequel les polymères cationiques présentent une charge cationique de 100 moles pour cent.

9. Procédé selon la revendication 1, dans lequel les polymères cationiques ont un poids moléculaire de 500 000 à 10 000 000 de daltons.

10. Procédé selon la revendication 1, comprenant en outre l'étape consistant à faire passer ladite eau de lavage à contre-courant après traitement au polymère à travers un filtre (5) ou un clarificateur (5) avant le passage de ladite eau de lavage à contre-courant à travers ladite membrane (6) de l'étape e.

11. Procédé selon la revendication 1, consistant en outre à :
faire passer un filtrat de ladite membrane (6) de l'étape e. à travers une membrane supplémentaire (9).
